# EUROPÄISCHE PATENTSCHRIFT

(11) **EP 2 927 273 B1**
(45) Veröffentlichungstag und Bekanntmachung des Hinweises auf die Patenterteilung: **07.06.2017**
(21) Anmeldenummer: 14163210.9
(22) Anmeldetag: 02.04.2014
(51) Int. Cl.: C08K 5/20, C08K 5/3492, C08L 77/00

(54) **Polyamidformmasse, hieraus hergestellte Formkörper sowie Verwendung der Polyamidformmassen**
Polyamide moulding material, moulded parts produced from the same and use of the polyamide moulding material
Masse de moulage en polyamide, corps moulé fabriqué à partir de celle-ci et utilisation des masses de moulage en polyamide

(43) Veröffentlichungstag der Anmeldung: 07.10.2015
(73) Patentinhaber: EMS-PATENT AG, 7013 Domat / Ems (CH)
(72) Erfinder: Aepli, Etienne, 7013 Domat/Ems (CH); Hoffmann, Botho, 7013 Domat/Ems (CH)
(74) Vertreter: Pfenning, Meinig & Partner mbB

(56) Entgegenhaltungen:
- EP-A1- 0 903 372
- EP-A1- 1 596 113
- WO-A1-2004/000921
- WO-A1-2007/087896

## Beschreibung

Die Erfindung betrifft eine Polyamidformmasse, die ein teilaromatisches Polyamid enthält sowie eine Mischung aus mindestens zwei UV-Absorbern. Ebenso betrifft die Erfindung Formkörper, die entsprechende Polyamidformmassen enthalten. Verwendung finden die erfindungsgemäßen Polyamidformmassen als Teile von elektrischen oder elektronischen Bauteilen oder Gehäuse oder Gehäusebestandteile, insbesondere Gehäuse oder Gehäuseteile für tragbare elektronische Geräte, Haushaltsgeräte, Haushaltsmaschinen, Geräte und Apparate für die Telekommunikation und Unterhaltungselektronik, Innen- und Außenteile im Automobilsektor und im Bereich von anderen Transportmitteln, Innen- und Außenteile, vorzugsweise mit tragender oder mechanischer Funktion im Bereich Elektro, Möbel, Sport, Maschinenbau, Sanitär und Hygiene, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien oder zur Herstellung von mono- oder mehrschichtigen Folien, Behältern oder Rohren.

Aus dem Stand der Technik ist die Verwendung von UV-Absorbern zur Herstellung von transparenten Formkörpern bekannt.

Aus der EP 1 992 659 A1 ist der Zusatz von Dibenzoylmethan-Verbindungen oder Aminohydroxybenzoylbenzoesäureester als UV-Absorber bekannt. Hieraus werden Formteile hergestellt, die für Licht bis zu einer Wellenlänge von 400 nm eine reduzierte Transmission aufweisen.

Aus der WO 2007/087896 A1 sind Polyamidformmassen zum Herstellen von transparenten, heissdampf-stabilisierbaren Formteilen und Extrudaten bekannt, denen ggf. ein UV-Stabilisator zugesetzt werden kann.

Ausgehend hiervon war es Aufgabe der vorliegenden Erfindung PolyamidFormmassen und daraus hergestellte Formkörper bereitzustellen, die gegenüber den aus dem Stand der Technik bekannten Formmassen verbesserte Vergilbungseigenschaften aufweisen.

Diese Aufgabe wird durch die Polyamidformmasse mit den Merkmalen des Anspruchs 1 sowie die hieraus hergestellten Formkörper oder Beschichtungen mit den Merkmalen des Anspruchs 14 gelöst. In Anspruch 16 werden erfindungsgemäße Verwendungen der Polyamidformmasse genannt. Die weiteren abhängigen Ansprüche zeigen vorteilhafte Weiterbildungen auf.

Erfindungsgemäß wird eine Polyamidformmasse bereitgestellt, die folgende Komponenten enthält:
a) mindestens ein teilaromatisches Polyamid herstellbar durch Polykondensation
   a1) von mindestens einer aromatischen Dicarbonsäure und ggf. mindestens einer aliphatischen Dicarbonsäure mit 6 bis 44 C-Atomen,
   a2) mindestens einem aliphatischen und/oder cycloaliphatischen Diamin und
   a3) ggf. mindestens einem Lactam mit 4 bis 15 C-Atomen und/oder mindestens einer α,ω-Aminosäure mit 4 bis 15 C-Atomen,
b) mindestens einen UV-Absorber aus der Gruppe der N,N'-Oxamide sowie
c) mindestens einen UV-Absorber aus der Gruppe der Hydroxyphenyltriazine.

Durch die erfindungsgemäßen Polyamidformmassen konnte überraschenderweise eine deutliche Verbesserung der Vergilbungseigenschaften dieser Formmassen erreicht werden. Durch die Kombination der genannten UV-Stabilisatoren konnte zum einen ein sehr niedriger Yellow-Index eingestellt werden, der auch bei einer Strahlungs- und Temperaturbehandlung nur einen geringfügigen Anstieg zeigte. Dies wurde durch die Kombination mindestens eines UV-Absorbers aus der Gruppe der N, N'-Oxamide und mindestens einem UV-Absorber aus der Gruppe der Hydroxyphenyltriazine erreicht. Der ursprüngliche Yellow-Index (YI 1) der erfindungsgemäßen Polyamidformmassen beträgt dabei bevorzugt maximal 9, besonders bevorzugt maximal 7. Weiterhin beträgt die Differenz aus dem Yellow-Index (YI 2) nach 12 Zyklen einer Strahlungs- und Temperaturbehandlung und dem ursprünglichen Yellow-Index (YI 1) vorzugsweise maximal 4, bevorzugt maximal 3 und besonders bevorzugt maximal 2. Hierbei handelt es sich um eine Strahlungs- und Temperaturbehandlung , die folgendermaßen aufgebaut ist: Die Platten für die Messung des Yellow-Indexes (YI 2) werden pro Zyklus 4 Stunden bei 60 °C mit UV-A bei einer Wellenlänge von 340 nm und einer spektralen Bestrahlungsstärke von 0,63 W/m²/nm bestrahlt und anschliessend für 4 Stunden bei 50 °C in einer mit Feuchtigkeit gesättigten Atmosphäre gelagert. Der Yellow-Index (YI 2) wird an Platten gemessen, die 12 solcher Zyklen durchlaufen haben.

Vorzugsweise ist der UV-Absorber aus der Gruppe der N, N'-Oxamide ausgewählt aus der Gruppe der N,N'-Oxamide der allgemeinen Formel I

R₁-NH-CO-CO-NH-R₂ I

wobei R₁ und R₂ cyclische Reste sind, wobei jeder einzelne Ring 4 bis 6 C-Atome enthält und die cyclischen Reste unabhängig voneinander ausgewählt sind aus der Gruppe bestehend aus homocyclischen Resten, heterocyclischen Resten, aromatischen Resten oder polycyclischen Resten sind und wobei die cyclischen Reste gegebenenfalls substituiert sind.

Besonders bevorzugt handelt es sich hierbei um einen UV-Absorber aus der Gruppe der Oxalanilide der allgemeinen Formel II 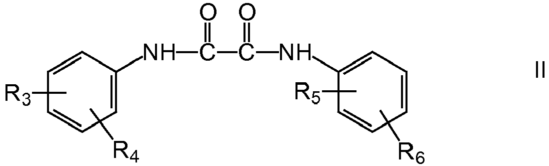 mit
R₃, R₄, R₅ und R₆ unabhängig ausgewählt aus der Gruppe bestehend aus H, Hydroxy, Phenyl, linearen oder verzweigten Alkoxyresten mit 1 bis 12 C-Atomen, bevorzugt 1 bis 8 C-Atomen, besonders bevorzugt 2 bis 6 C-Atomen, linearen oder verzweigten Alkylresten mit 1 bis 12 C-Atomen, bevorzugt 1 bis 8 C-Atomen, besonders bevorzugt 2 bis 6 C-Atomen,
insbesondere eine Verbindung der Formel III: 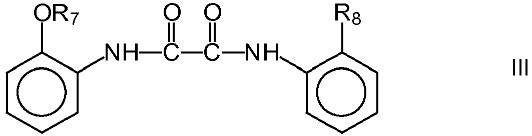 mit
R₇ und R₈ unabhängig voneinander ausgewählt aus der Gruppe bestehend aus linearen oder verzweigten Alkylresten mit 1 bis 12 C-Atomen, bevorzugt 1 bis 8 C-Atomen, besonders bevorzugt 2 bis 6 C-Atomen.

Der UV-Absorber aus der Gruppe der Hydroxyphenyltriazine ist vorzugsweise eine Verbindung der allgemeinen Formel IV 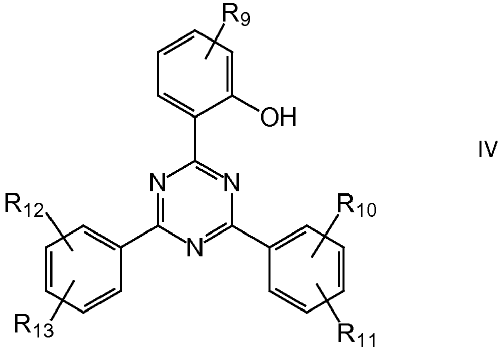 mit
R₉, R₀, R₁₁, R₁₂ und R₁₃ unabhängig ausgewählt aus der Gruppe bestehend aus H, Hydroxy, Phenyl, linearen oder verzweigten Alkoxyresten mit 1 bis 12 C-Atomen, bevorzugt 1 bis 8 C-Atomen, besonders bevorzugt 2 bis 6 C-Atomen, linearen oder verzweigten Alkylresten mit 1 bis 12 C-Atomen, bevorzugt 1 bis 8 C-Atomen, besonders bevorzugt 2 bis 6 C-Atomen, insbesondere eine Verbindung der Formel V: mit 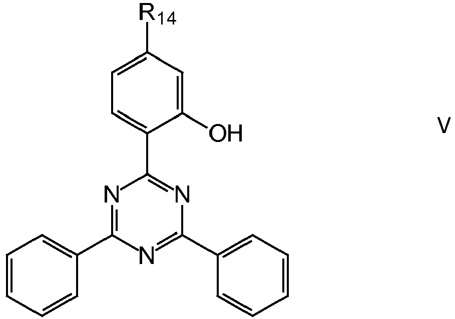 R₁₄ = linearen oder verzweigten Alkoxyresten mit 1 bis 12 C-Atomen, bevorzugt 1 bis 8 C-Atomen, besonders bevorzugt 2 bis 6 C-Atomen.

In einer besonders bevorzugten Ausführungsform enthält die erfindungsgemässe Polyamidformmasse nur jeweils einen UV-Absorber aus der Gruppe der N,N'-Oxamide und aus der Gruppe der Hydroxyphenyltriazine.

Ebenso ist es möglich, dass die erfindungsgemäße Polyamidformmasse weitere UV-Stabilisatoren enthält. Diese können insbesondere ausgewählt sein aus der Gruppe der Hydroxyphenylbenzotriazole, Dibenzoylmethane, Aminohydroxybenzoylbenzoesäureester, Hydroxybenzophenone, Hindered Amin Light Stabilizers (HALS), sterisch anspruchsvolle Phenole und Mischungen hiervon.

Für den Aufbau der Polyamide wird vorzugsweise eine aliphatische Dicarbonsäure ausgewählt aus der Gruppe bestehend aus Bernsteinsäure, Glutarsäure, Adipinsäure, Pimelinsäure, Korksäure, Azelainsäure, Sebazinsäure, Undecandisäure, Dodecandisäure, Tridecandisäure, Tetradecandisäure Pentadecandisäure, Hexadecandisäure, Octadecandisäure und Mischungen hiervon eingesetzt. Als aromatische Dicarbonsäure werden vorzugsweise Isophthalsäure, Terephthalsäure, Naphthalindicarbonsäure und Mischungen hiervon eingesetzt.

Hierbei ist es insbesondere bevorzugt, wenn lediglich eine einzige aliphatische Dicarbonsäure verwendet wird.

Unter einem aliphatischen Diamin sind im Sinne der vorliegenden Erfindung auch Diamine zu verstehen die aromatische Struktureinheiten enthalten, bei denen aber die Aminogruppen mit einem aliphatischen Kohlenstoffatom verknüpft sind. Bevorzugte Vertreter dieser Gruppe sind Diamine sind MXD (meta-Xylylendiamin), und PXD (para-Xylylendiamin).

Eine besonders bevorzugte weitere Ausführungsform der vorliegenden Erfindung sieht vor, dass die einzige aliphatische Dicarbonsäure, die bei der Herstellung der erfindungsgemäßen Polyamidformmassen verwendet wird, ausgewählt ist aus der Gruppe bestehend aus Adipinsäure (6 Kohlenstoffatome), Azelainsäure (9 Kohlenstoffatome), Sebazinsäure (10 Kohlenstoffatome), Dodecandisäure (12 Kohlenstoffatome) Tetradecandisäure (14 Kohlenstoffatome) und Octadecandisäure (18 Kohlenstoffatome).

In einer weiteren Ausführungsform ist bei der erfindungsgemäßen teilaromatischen Polyamidformmasse insbesondere bevorzugt, dass die einzige aliphatische Dicarbonsäure, die bei der Herstellung der erfindungsgemäßen Polyamidformmassen verwendet wird, Dodecandisäure (12 Kohlenstoffatome) ist.

Besonders bevorzugt werden für die Bildung des Polyamids für die Dicarbonsäuren Mischungen aus Isophthalsäure und Terephthalsäure oder aus Isophthalsäure, Terephthalsäure und Dodecandisäure eingesetzt.

Das für die Bildung des Polyamids eingesetzte aliphatische oder cycloaliphatische Diamin ist vorzugsweise ausgewählt aus der Gruppe bestehend aus Ethylendiamin, Butandiamin, Pentandiamin, Hexamethylendiamin, Octandiamin, Methyloctandiamin, Nonandiamin, Decandiamin, Undecandiamin, Dodecandiamin, Trimethylhexamethylendiamin, Methylpentandiamin, PACM (Bis(aminocyclohexyl)methan) und seinen Alkylderivaten, Bis(aminocyclohexyl)propan und seinen Alkylderivaten, Isophorondiamin, Norbornandiamin, Bis(aminomethyl)norbornan, Xylylendiamin, Bis(aminomethyl)cyclohexanund seinen Alkylderivaten, TMACM (3,3',5,5'-Tetramethyl-4,4'-diaminocyclohexylmethan) sowie Mischungen hiervon.

Eine weitere besonders bevorzugte Ausführungsform der vorliegenden Erfindung sieht vor, dass das Diamin, das bei der Herstellung der erfindungsgemäßen Polyamidformmassen verwendet wird, ausgewählt ist aus der Gruppe bestehend aus MACM (3,3'-Dimethyl-4,4'-diaminocyclohexylmethan), oder einer Mischung aus 1,6-Hexandiamin, Bis(3-methyl-4-aminocyclohexyl)methan und Bis(4-amino-cyclohexyl)methan.

Weiterhin kann für den Aufbau der Polyamide mindestens ein Lactam und/oder mindestens eine α,ω-Aminosäure eingesetzt werden. Bevorzugte Lactame sind Lactame bzw. α,ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure, 1,6 Aminohexansäure, 1,7-Aminoheptansäure, 1,8-Aminooctansäure, 1,11-Aminoundecansäure und 1,12-Aminododecansäure. Besonders bevorzugt ist hier der Einsatz von Laurinlactam.

Das erfindungsgemäße teilaromatische Polyamid ist vorzugsweise ein amorphes oder teilkristallines Polyamid und insbesondere ausgewählt aus der Gruppe bestehend aus PA 61, PA 6I/6T, PA 10T/6T, PA 10T/612, PA MXD6, PA 6T/6I, PA 6T/66, PA 6I/6T/6NDA (NDA = Naphthalindicarbonsäure), PA MXDI/6I, PA MXDI/XDT/6I/6T, PA 6T/6I/66 PA MXDI/12I, PA MXDI, PA NDT/INDT, PA MACMI/12, PA MACMT/12, PA MACMI/MACM12, PA MACMT/MACM12, PA MACMI/MACMNDC, PA MACMT/MACMNDC, PA MACMI/MACMT/12, PA 6I/MACMI/12, PA 6I/6T/MACMI/MACMT, PA 6I/6T/MACMI/MACMT/12, PA 6I/6T/MACMI/MACMT/MACM12/612, PA MACMI/MACMT/MACM12/12, PA MACMI/MACMT/MACM12, PA 6I/6T/6NDC/MACMI/MACMT/MACMNDC, wobei das MACM ganz oder teilweise durch PACM und/oder das Laurinlactam ganz oder teilweise durch Caprolactam ersetzt sein kann. Bevorzugt ist das teilaromatische Polyamid ausgewählt aus der Gruppe bestehend aus PA 6I/6T, PA 10T/6T, PA 10T/612, PA 6T/6I, PA 6T/66, PA MACMI/12, PA MACMT/12, PA MACMI/MACM12, PA MACMT/MACM12, PA MACMI/MACMT/12, PA 6I/6T/MACMI/MACMT, PA 6I/6T/MACMI/MACMT/12, PA 6I/6T/MACMI/MACMT/PACMI/PACMT/12, PA MACMI/MACMT/MACM12, wobei das Laurinlactam ganz oder teilweise durch Caprolactam ersetzt sein kann. Besonders bevorzugt sind die amorphen, teilaromatischen Polyamide PA MACMI/12, PA MACMI/MACM12, PA MACMT/MACM12, PA MACMI/MACMT/12, PA 6I/6T/MACMI/MACMT, PA 6I/6T/MACMI/MACMT/12, PA 6I/6T/MACMI/MACMT/PACMI/PACMT/12, PA MACMI/MACMT/MACM12 und ganz besonders bevorzugt PA 6I/6T/MACMI/MACMT/PACMI/PACMT/12 und PA MACMI/MACMT/MACM12.

Die Schreibweisen und Abkürzungen für Polyamide und deren Monomere sind in der ISO-Norm 1874-1:1992(E) festgelegt.

MACM steht für die Bezeichnung Bis(4-amino-3-methyl-cyclohexyl)-methan bzw. 3,3'-Dimethyl-4-4'-diaminodicyclohexylmethan (CAS Nr. 6864-37-5). PACM steht für die Bezeichnung Bis(4-aminocyclohexyl)-methan bzw. 4,4'-Diaminodicyclohexylmethan (CAS Nr. 1761-71-3).

Eine weitere bevorzugte Ausführungsform sieht vor, dass als Polyamidformmasse ein amorphes teilaromatisches Polyamid eingesetzt wird, wodurch eine verbesserte Farbbrillanz bei Einfärbungen, eine erhöhte Kratzfestigkeit und ein verbesserter Oberflächenglanz gegenüber der Verwendung von teilkristallinen, teilaromatischen Polyamiden oder amorphen aliphatischen Polyamiden festzustellen sind.

Amorphe Polyamide zeigen in der dynamischen Differenz-Kalorimetrie (engl. Differential Scanning Calorimetry, DSC) nach ISO 11357 bei einer Aufheizrate von 20 K/min eine Schmelzwärme von maximal 5 J/g, bevorzugt von maximal 3 J/g, besonders bevorzugt von 0 bis 1 J/g.

Die relative Viskosität der amorphen, teilaromatischen Polyamide beträgt 1,35 bis 2,15, bevorzugt 1,40 bis 1,80, besonders bevorzugt 1,45 bis 1,70 gemessen mit 0,5 g in 100 ml m-Kresol bei 20 °C.

Die relative Viskosität der teilkristallinen, teilaromatischen Polyamide beträgt 1,40 bis 2,15, bevorzugt 1,45 bis 2,0, besonders bevorzugt 1,50 bis 1,90 gemessen mit 0,5 g in 100 ml m-Kresol bei 20 °C.

Die erfindungsgemäßen Formmassen können zusätzlich weitere Additive enthalten, insbesondere ausgewählt aus der Gruppe bestehend aus Kondensationskatalysatoren, Kettenreglern, Entschäumern, anorganischen Stabilisatoren, organischen Stabilisatoren, Gleitmitteln, Farbstoffen, Markierungsmitteln, Pigmenten, Farbstoffen, Nukleierungsmitteln, Antistatika, Entformungsmitteln, optischen Aufhellern, natürlichen Schichtsilikaten, synthetischen Schichtsilikaten, Glasfasern und deren Mischungen.

Die weiteren Additive können vorzugsweise in einer Menge von 0,01 bis 6 Gew.-%, bevorzugt 0,05 bis 6 Gew.-% und besonders bevorzugt 0,1 bis 5 Gew.-%, jeweils bezogen auf die gesamte Polyamidformmasse enthalten sein.

Die erfindungsgemäße Polyamidformmasse weist vorzugsweise folgende Zusammensetzungen auf.
a) 91,6 bis 99,97 Gew.-%, bevorzugt 92,4 bis 99,85 Gew.-% und besonders bevorzugt 93,4 bis 99,7 Gew.-% des mindestens einen teilaromatischen, amorphen Polyamids
b) 0,01 bis 1,2 Gew.-%, bevorzugt 0,05 bis 0,8 Gew.-% und besonders bevorzugt 0,1 bis 0,6 Gew.-% des mindestens einen UV-Stabilisators aus der Gruppe der N,N'-Oxamide,
c) 0,01 bis 1,2 Gew.-%, bevorzugt 0,05 bis 0,8 Gew.-% und besonders bevorzugt 0,1 bis 0,6 Gew.-% des mindestens einen UV-Stabilisators aus der Gruppe der Hydroxyphenyltriazine,
d) 0,01 bis 6 Gew.-%, bevorzugt 0,05 bis 6 Gew.-% und besonders bevorzugt 0,1 bis 5 Gew.-% weitere Additive,
wobei sich die Komponenten a) bis d) auf 100 Gew.-% ergänzen.

Eine besonders bevorzugte Ausführungsform der erfindungsgemäßen Polyamidformmasse besteht das Polyamid a) entweder aus dem aus dem teilaromatischen, amorphen Polyamid PA 6I/6T/MACMI/MACMT/PACMI/PACMT/12 oder aus dem teilaromatischen, amorphen Polyamid PA MACMI/MACMT/MACM12 sowie als UV-Stabilisatoren eine Verbindung gemäß Formel III und eine Verbindung gemäß Formel IV oder V.

Weiterhin enthält die erfindungsgemäße Polyamidformmasse als Dicarbonsäure a1) vorzugsweise
- 0 bis 40 Mol-%, bevorzugt 0 bis 30 Mol-% und besonders bevorzugt 0 bis 25 Mol-% der mindestens einen aliphatischen Dicarbonsäure, bezogen auf 50 Mol-% Dicarbonsäure, und
- 10 bis 50 Mol-%, bevorzugt 20 bis 50 Mol-% und besonders bevorzugt 25 bis 50 Mol-% der mindestens einen aromatischen Dicarbonsäure, bezogen auf 50 Mol-% Dicarbonsäure.

Weiterhin enthält die erfindungsgemäße Polyamidformmasse als Diamin a2) vorzugsweise
- 0 bis 50 Mol-%, bevorzugt 0 bis 45 Mol-% und besonders bevorzugt 35 bis 42 Mol-% der mindestens eines aliphatischen Diamins, bezogen auf 50 Mol-% Diamin, und
- 50 bis 0 Mol-%, bevorzugt 50 bis 5 Mol-% und besonders bevorzugt 15 bis 8 Mol-% des mindestens einen cyloaliphatischen Diamins, bezogen auf 50 Mol-% Diamin.

In einer bevorzugten Ausführungsform enthält die Polyamidformmasse neben den Disäureanteilen a1) und den Diaminanteilen a2) einen Anteil a3) aus mindestens einem Lactam mit 4 bis 15 C-Atomen und/oder mindestens einer α,ω-Aminosäure mit 4 bis 15 C-Atomen in Mengen von 0 bis 40 Mol-%, bevorzugt 0 bis 30 Mol-%, besonders bevorzugt 2 bis 30 Mol-% bezogen auf 100 Mol-% des Polyamids a).

Enthalten die erfindungsgemäßen Polyamide nur Disäuren a1) und Diamine a2) so sind deren molare Mengenangaben auf 50 Mol-% Diamin und 50 Mol-% Disäure bezogen und die Summe der Diamin- und Disäure-Anteile ergibt 100 Mol-% für das erfindungsgemäße Polyamid a).

Enthalten die erfindungsgemäßen Polyamide neben Disäuren a1) und Diaminen a2) auch Lactame oder α,ω-Aminosäuren a3) sind die angegebenen molaren Mengen der verschiedenen Disäuren a1) als deren relative Menge normiert auf insgesamt 50 Mol-Anteile Disäure im Polyamid a) und die angegebenen molaren Mengen der verschiedenen Diamine a2) als deren relative Menge normiert auf insgesamt 50 Mol-Anteile Diamin im Polyamid a) zu verstehen.

Veranschaulicht wird das System an den beiden folgenden Zusammensetzungsbeispielen:
Für ein Polyamid PA MACMI/12 aus
   20 Mol-% Lactam 12 (12),
   40 Mol-% Isophthalsäure (I) und
   40 Mol-% Bis(4-amino-3-methyl-cyclohexyl)-methan (MACM)
   mit Summe der Monomere 100 Mol-%,
resultiert für die Zusammensetzung die Angabe:
   MACM: 50 Mol-Anteile (bezogen auf 50 Mol-Anteile Diamin im Polyamid a)),
   IPS: 50 Mol-Anteile (bezogen auf 50 Mol-Anteile Disäure im Polyamid a)) und
   Lactam12: 20 Mol-% (bezogen auf 100 Mol-% Polyamid a)).

Für ein Polyamid a) PA MACMI/MACMT/12 mit
20 Mol-% Lactam 12 (12),
30 Mol-% Isophthalsäure (I),
10 Mol-% Terephtalsäure (T) und
40 Mol-% Bis(4-amino-3-methyl-cyclohexyl)-methan (MACM)
mit Summe der Monomere 100 Mol-%,
resultiert für die Zusammensetzung die Angabe

MACM: 50 Mol-Anteile (bezogen auf 50 Mol-Anteile Diamin im Polyamid a)), IPS: 37,5 Mol-Anteile (bezogen auf 50 Mol-Anteile Disäure im Polyamid a)), TPS: 12,5 Mol-Anteile (bezogen auf 50 Mol-Anteile Disäure im Polyamid a)) und
Lactam12 20 Mol-% (bezogen auf 100 Mol-% Polyamid a)).

Bei den Mengenangaben zu den Disäuren a1) und Diaminen a2) der erfindungsgemäßen Polyamide gilt immer, dass die Summe der molaren Anteile des Diamins gleich der Summe der molaren Anteile der Dicarbonsäuren ist.

Die zuvor genannten Mengenangaben bezüglich der Dicarbonsäuren - wie auch alle weiteren Mengenangaben der Dicarbonsäuren bzw. Diamine - sind dabei so zu verstehen, dass sich ein entsprechendes Molverhältnis dieser bei der Polykondensation eingesetzten Edukte auch in den derart durch Polykondensation hergestellten Polyamidformmassen wiederfindet.

Es werden ebenso Formkörper oder Beschichtungen bereitgestellt, die zuvor beschriebenen Polyamidformmassen enthalten oder hieraus bestehen.

Verwendung finden die erfindungsgemäßen Polyamidformmassen zur Herstellung von Formkörpern oder Beschichtungen, insbesondere Teile eines elektrischen oder elektronischen Bauteils, eines Gehäuses oder eines Gehäusebestandteils, vorzugsweise Gehäuse oder Gehäuseteile für tragbare elektronische Geräte, Haushaltsgeräte, Haushaltsmaschinen, Geräte und Apparate für die Telekommunikation und Unterhaltungselektronik, Innen und Außenteile im Automobilsektor und im Bereich von anderen Transportmitteln, Innen und Außenteile, vorzugsweise mit tragender oder mechanischer Funktion im Bereich Elektro, Möbel, Sport, Maschinenbau, Sanitär und Hygiene, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien oder zur Herstellung von mono- oder mehrschichtigen Folien, Behältern oder Rohren. Die mono-oder mehrschichtigen Folien können anschließend mit einem anderen Material, bevorzugt einem Polyamid hinterspritzt werden, wobei die Folie vor dem Verspritzen auch tiefgezogen werden kann.

Anhand der nachfolgenden Beispiele soll der erfindungsgemäße Gegenstand näher beschrieben werden, ohne diesen auf die hier gezeigten spezifischen Ausführungsformen einschränken zu wollen.

Zur Herstellung der Polyamidformmasse werden die Komponenten a) bis c) und gegebenenfalls d) auf üblichen Compoundiermaschinen, wie z.B. ein-oder zweiwelligen Extrudern oder Schneckenknetern, in der Polymerschmelze gemischt (compoundiert). Die Komponenten werden dabei einzeln in den Einzug dosiert oder in Form eines Dryblends zugeführt.

Die Komponenten b), c) und/oder d) können direkt oder in Form von Masterbatches eingebracht werden. Bei dem Trägermaterial der Masterbatches handelt es sich bevorzugt um ein Polyamid. Unter den Polyamiden eignen sich besonders PA 6, PA 11, PA 12, PA 6/12, PA MACM 12 oder PA MACMI/12.

Zur Dryblend-Herstellung werden die getrockneten Granulate des Polyamids a), die Komponenten b) und c) und gegebenenfalls weitere Additive d) vermischt. Diese Mischung wird mittels eines Taumelmischers, Rhönradmischers oder Taumeltrockners 10 - 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 230 °C bis 350 °C. Vor der Düse kann Vakuum angelegt oder atmosphärisch entgast werden. Die Schmelze wird in Strangform ausgetragen, im Wasserbad bei 10 bis 80 °C abgekühlt und anschließend granuliert. Es kann auch eine Unterwassergranulierung durchgeführt werden. Das Granulat wird für 12 bis 24 Stunden bei 80 bis 120 °C unter Stickstoff oder im Vakuum auf einen Wassergehalt von unter 0.1 Gew.-% getrocknet.

Herstellung der Prüfkörper aus den erfindungsgemäßen Polyamidformmassen:
Die Prüfkörper wurden auf einer Spritzgussmaschine der Firma Arburg, Modell Allrounder 420 C 1000-250 hergestellt. Dabei wurden aufsteigende Zylindertemperaturen von 230 °C bis 295 °C verwendet. Die Formtemperatur betrug 80 °C. Bei den Platten für die Messung der Yellow-Indices wurden hochglanzpolierte Formen verwendet.

Die Prüfkörper wurden in trockenem Zustand verwendet; dazu wurden sie nach dem Spritzguss mindestens 48 h bei Raumtemperatur in trockener Umgebung, d.h. über Silicagel gelagert.

Die Platten für die Messung des Yellow-Indexes (YI 2) werden pro Zyklus 4 Stunden bei 60 °C mit UV-A bei einer Wellenlänge von 340 nm und einer spektralen Bestrahlungsstärke von 0,63 W/m²/nm bestrahlt und anschliessend für 4 Stunden bei 50 °C in einer mit Feuchtigkeit gesättigten Atmosphäre gelagert. Der Yellow-Index (YI 2) wird an Platten gemessen, die 12 solcher Zyklen durchlaufen haben.

In dieser Anmeldung verwendete Prüfkörper und Messmethoden:
Yellow-Index
   ASTM E313
   Platte 60 x 60 x 1 mm
   Temperatur 23 °C
Zug-E-Modul:
   ISO 527 mit einer Zuggeschwindigkeit von 1 mm/min
   ISO-Zugstab, Norm: ISO/CD 3167, Typ A1, 170 x 20/10 x 4 mm, Temperatur 23 °C
Reissfestigkeit und Reissdehnung:
   ISO 527 mit einer Zuggeschwindigkeit von 50 mm/min bei unverstärkten und 5 mm/min bei verstärkten Materialien
   ISO-Zugstab, Norm: ISO/CD 3167, Typ A1, 170 x 20/10 x 4 mm, Temperatur 23 °C
Schlagzähigkeit nach Charpy:
   ISO 179/*eU
   ISO-Prüfstab, Norm: ISO/CD 3167, Typ B1, 80 x 10 x 4 mm, Temperatur 23 °C
   * 1 = nicht instrumentiert, 2 = instrumentiert
Kerbschlagzähigkeit nach Charpy:
   ISO 179/*eA
   ISO-Prüfstab, Norm: ISO/CD 3167, Typ B1, 80 x 10 x 4 mm, Temperatur 23 °C
* 1 = nicht instrumentiert, 2 = instrumentiert
Relative Viskosität
   ISO 307
   Granulat
   0,5 g in 100 ml m-Kresol
   Temperatur 20 °C
   Berechnung der relativen Viskosität (RV) nach RV = t/t₀ in Anlehnung an Abschnitt 11 der Norm.
Schmelzwärme:
   ISO-Norm 11357
   Granulat

Die Differential Scanning Calorimetry (DSC) wurde mit einer Aufheizrate von 20 K/min durchgeführt.

Die Tabelle 1 zeigt die verwendeten, bei der EMS-Chemie AG hergestellten Polyamidmaterialien.

**Tabelle 1**

| **Material** | **Beschreibung** | **Hersteller** |
|---|---|---|
| Polyamid A1 | amorphes Polyamid 6I/6T/MACMI/MACMT/PACMI/PACMT/12 aus 1,6-Hexandiamin (39,0 Mol-%), Bis(3-methyl-4-amino-cyclohexyl)methan (7,1 Mol-%), Bis(4-amino-cyclohexyl)methan (2,5 Mol-%), Isophthalsäure (24,3 Mol-%), Terephthalsäure (24,3 Mol-%) und Laurinlactam (2,8 Mol-%) | EMS-CHEMIE AG, Schweiz |
| | RV 1,62 (gemessen mit 0,5 g in 100 ml m-Kresol bei 20 °C) | |
| | Glasübergangstemperatur 159 °C | |
| Polyamid A2 | amorphes Polyamid MACMI/MACMT/MACM12 aus Bis(3-methyl-4-amino-cyclohexyl)methan (50 Mol-%), Isophthalsäure (13,5 Mol-%), Terephthalsäure (13,5 Mol-%) und Dodecandisäure (23 Mol-%) | EMS-CHEMIE AG, Schweiz |
| | RV 1,54 (gemessen mit 0,5 g in 100 ml m-Kresol bei 20 °C) | |
| | Glasübergangstemperatur 200 °C | |

| | | |
|---|---|---|
| RV relative Viskosität | | |

Die Tabelle 2 zeigt die untersuchten, kommerziell erhältlichen UV-Stabilisatoren und Hitzestabilisatoren.

**Tabelle 2**

| **Material** | **chemische Bezeichnung** | **Schmelzpunkt [°C]** | **Handelsname** | **Hersteller** |
|---|---|---|---|---|
| UV-Stabilisator B1 | N-(2-Ethoxyphenyl)-N'-(2-ethylphenyl)oxamide | 126 | Tinuvin 312 | BASF, Schweiz |
| UV-Stabilisator B2 | 2-(4,6-Diphenyl-1,3,5-triazin-2yl)-5-hexyloxyphenol | 149 | Tinuvin 1577 | BASF, Schweiz |
| UV-Stabilisator B3 | 2-(4,6-Diaryl-1,3,5-triazin-2yl)-5-(alkoxy substituiert)-phenol | 125 | Tinuvin 1600 | BASF, Schweiz |
| UV-Stabilisator B4 | 2-tert-butyl-6-(5-chlorobenzotriazol-2-yl)-4-methylphenol | 138 | Tinuvin 326 | BASF, Schweiz |
| UV-Stabilisator B5 | 2-(benzotriazol-2-yl)-4,6-bis(2-phenylpropan-2-yl)phenol | 139 | Tinuvin 234 | BASF, Schweiz |
| UV-Stabilisator B6 | Bis(2,2,6,6,-tetramethyl-4-piperidyl)sebacat | 83 | Tinuvin 770 DF | BASF, Schweiz |
| UV-Stabilisator B7 | 2-(2-Hydroxyphenyl)-benzotriazol-Derivat | 134 | Tinuvin Carboprotect | BASF, Schweiz |
| UV-Stabilisator B8 | 2-(Benzotriazol-2-yl)-4,6-bis(2-methylbutan-2-yl)phenol | 84 | Tinuvin 328 | BASF, Schweiz |
| UV-Stabilisator B9 | 2-(Benzotriazol-2-yl)-6-[[3-(benzotriazol-2-yl)-2-hydroxy-5-(2,4,4-trimethylpentan-2-yl)phenyl]methyl]-4-(2,4,4-trimethylpentan-2-yl)phenol | 198 | Tinuvin 360 | BASF, Schweiz |
| UV-Stabilisator B10 | Poly[[6-[(1,1 ,3,3,tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)imino]]) | | Chimasorb 944 FD | BASF, Schweiz |
| UV-Stabilisator B11 | 1-(4-Metoxyphenyl)-3-(4-tert-butylphenyl)propan-1,3-dion | 82 | Parsol 1789 | DSM, Niederlande |
| Hitzestabilisator 1 | N,N'-Hexan-1,6-diylbis[3-(3,5-di-tert-butyl-4-hydroxyphenyl-propionamid | 159 | Irganox 1098 | BASF, Schweiz |
| Hitzestabilisator 2 | Tris(2,4-ditert-butylphenyl)phosphit | 183 | Hostanox PAR 24 | BASF, Schweiz |

In Tabelle 3 sind erfindungsgemäße Beispiele mit den jeweiligen Zusammensetzungen sowie den Testergebnissen hinsichtlich des Yellow-Index dargestellt. Der Yellow-Index (YI 1) stellt dabei den ursprünglichen Yellow-Index der Polyamidformmasse dar, der Yellow-Index (YI 2) zeigt den Yellow-Index nach 12 Zyklen der Strahlungs- und Temperaturbehandlung. Der Wert (YI 2) - (YI 1) in der letzten Zeile der Tabelle stellt die Differenz des Yellow-Indexes nach der Strahlungs- und Temperaturbehandlung und dem ursprünglichen Yellow-Index (YI 1), also den Anstieg des Yellow-Indexes dar.

**Tabelle 3**

| | | **Beispiele** | | | |
|---|---|---|---|---|---|
| **Komponenten** | **Einheit** | **1** | **2** | **3** | **4** |
| Polyamid A1 | Gew.-% | 99,2 | 98,6 | 99,2 | - |
| Polyamid A2 | Gew.-% | - | - | - | 99,2 |
| UV-Stabilisator B1 | Gew.-% | 0,2 | 0,35 | 0,2 | 0,2 |
| UV-Stabilisator B2 | Gew.-% | 0,2 | 0,35 | - | 0,2 |
| UV-Stabilisator B3 | Gew.-% | - | - | 0,2 | - |
| Hitzestabilisator 1 | Gew.-% | 0,2 | 0,35 | 0,2 | 0,2 |
| Hitzestabilisator 2 | Gew.-% | 0,2 | 0,35 | 0,2 | 0,2 |

| **Tests** | | | | | |
|---|---|---|---|---|---|
| Yellow-Index (YI 1) | orginal | 5,4 | 6,4 | 6,8 | 4,8 |
| Yellow-Index (YI 2) | 12 Zyklen | 7,3 | 8,1 | 8,6 | 5,6 |
| (YI 2) - (YI 1) | - | 1,9 | 1,7 | 1,8 | 0,8 |
| Zug-E-Modul | MPa | 2700 | 2720 | - | 2130 |
| Reissfestigkeit | MPa | 78 | 80 | - | 65 |
| Reissdehnung | % | 90 | 87 | - | 35 |
| Schlagzähigkeit Charpy 23 °C | kJ/m2 | oB | oB | - | oB |
| Kerbschlagzähigkeit Charpy 23 °C | kJ/m2 | 11 | 11 | - | 9 |

| | | | | | |
|---|---|---|---|---|---|
| oB ohne Bruch | | | | | |

In Tabelle 3 sind drei erfindungsgemäße Beispiele mit dem Polyamid A1 dargestellt. Die Beispiele 1 und 2 basieren dabei auf einer Kombination mit den UV-Stabilisatoren B1 und B2 während Beispiel 3 eine Kombination der UV-Stabilisatoren B1 und B3 enthält. Im Beispiel 4 ist eine Zusammensetzung auf Basis des Polyamids A2 mit den UV-Stabilisatoren B1 und B2 verwendet worden. Weiterhin enthalten alle Beispiele 1 bis 4 die in Tabelle 2 aufgeführten Hitzestabilisatoren 1 und 2.

Aus den Messungen des Yellow-Indexes (YI 1) zeigt sich, dass bei allen vier Zusammensetzungen ein geringer ursprünglicher Yellow-Index von maximal 6,8 vorliegt. Nach den zwölf Zyklen der Strahlungs- und Temperaturbehandlung steigt der Yellow-Index (YI 2) auf einen Wert von maximal 8,6 (Beispiel 3). Damit zeigen alle Beispiele einen Anstieg des Yellow-Indexes nach der Strahlungs- und Temperaturbehandlung von weniger als 2.

In Tabelle 4 werden Vergleichsbeispiele 4 bis 12 mit den jeweiligen Zusammensetzungen der Polyamidformmasse und den Testergebnissen bezüglich des Yellow-Indexes in Analogie zu Tabelle 3 dargestellt.

**Tabelle 4**

| | | **Vergleichsbeispiele** | | | | | | | | |
|---|---|---|---|---|---|---|---|---|---|---|
| **Komponenten** | **Einheit** | **4** | **5** | **6** | **7** | **8** | **9** | **10** | **11** | **12** |
| Polyamid A1 | Gew.-% | 99,6 | 99,4 | 99,4 | 99,2 | 99,4 | 99,2 | 99,4 | 99,2 | 99,4 |
| UV-Stabilisator B1 | Gew.-% | - | 0,2 | - | 0,2 | - | 0,2 | - | 0,2 | - |
| UV-Stabilisator B2 | Gew.-% | - | - | 0,2 | - | - | - | - | - | - |
| UV-Stabilisator B4 | Gew.-% | - | - | - | 0,2 | 0,2 | - | - | - | - |
| UV-Stabilisator B5 | Gew.-% | - | - | - | - | - | 0,2 | 0,2 | - | - |
| UV-Stabilisator B6 | Gew.-% | - | - | - | - | - | - | - | 0,2 | 0,2 |
| Hitzestabilisator 1 | Gew.-% | 0,2 | 0,2 | 0,2 | 0,2 | 0,2 | 0,2 | 0,2 | 0,2 | 0,2 |
| Hitzestabilisator 2 | Gew.-% | 0,2 | 0,2 | 0,2 | 0,2 | 0,2 | 0,2 | 0,2 | 0,2 | 0,2 |

| **Tests** | | | | | | | | | | |
|---|---|---|---|---|---|---|---|---|---|---|
| Yellow-Index (YI 1) | orginal | 2,4 | 4,1 | 5,4 | 17,6 | 18,3 | 9,8 | 12,2 | 5,7 | 5,2 |
| Yellow-Index (YI 2) | 12 Zyklen | 18,0 | 16,5 | 10,7 | 24,0 | 24,0 | 15,6 | 15,9 | 16,8 | 17,6 |
| (YI 2) - (YI 1) | - | 15,6 | 12,4 | 5,3 | 6,4 | 5,7 | 5,8 | 5,7 | 11,1 | 12,4 |
| Zug-E-Modul | MPa | 2700 | - | - | - | - | - | - | - | - |
| Reissfestigkeit | MPa | 85 | - | - | - | - | - | - | - | - |
| Reissdehnung | % | 90 | - | - | - | - | - | - | - | - |
| Schlagzähigkeit Charpy 23 °C | kJ/m2 | oB | - | - | - | - | - | - | - | - |
| Kerbschlagzähigkeit Charpy 23 °C | kJ/m2 | 12 | - | - | - | - | - | - | - | - |

| | | | | | | | | | | |
|---|---|---|---|---|---|---|---|---|---|---|
| oB ohne Bruch | | | | | | | | | | |

Alle Vergleichsbeispiele 4 bis 12 basierend auf dem Polyamid A1 und unterscheiden sich lediglich in den zugesetzten UV-Stabilisatoren. So ist Vergleichsbeispiel 4 frei von jeglichen UV-Stabilisatoren während in Vergleichsbeispiel 5 nur UV-Stabilisator B1 alleine und im Vergleichsbeispiel 6 UV-Stabilisator B2 alleine eingesetzt wurde. Die weiteren Vergleichsbeispiele 7-12 zeigen dann Kombinationen von zwei UV-Stabilisatoren, wie sie in der Tabelle 2 aufgeführt sind.

Für die Vergleichsbeispiele 4 und 5 kann festgestellt werden, dass der ursprüngliche Yellow-Index (YI 1) gering ist, die anschließende Strahlungs- und Temperaturbehandlung aber zu einem extremen Anstieg des Yellow-Indexes führt. Das Vergleichsbeispiel 6 zeigt zwar einen geringeren Anstieg, der aber dennoch deutlich über dem Anstieg des Yellow-Indexes bei den erfindungsgemäßen Beispielen liegt. Auch die weiteren Vergleichsbeispiele 7-12 zeigen entweder einen deutlich höheren Ursprungswert für den Yellow-Index (YI 1, Vergleichsbeispiele 7 bis 10) oder einen deutlich höheren Anstieg des Yellow-Indexes während der Strahlungs- und Temperaturbehandlung (Vergleichsbeispiele 11 und 12).

In Tabelle 5 sind weitere Vergleichsbeispiele 18 bis 22 anhand der Zusammensetzungen der Poylamidformmasse und den Testergebnissen bezüglich des Yellow-Indexes dargestellt.

| | | **Vergleichsbeispiele** | | | | | | | | | |
|---|---|---|---|---|---|---|---|---|---|---|---|
| **Komponenten** | **Einheit** | **13** | **14** | **15** | **16** | **17** | **18** | **19** | **20** | **21** | **22** |
| Polyamid A1 | Gew.-% | 99,4 | 99,2 | 99,2 | 99,4 | 99,2 | 99,4 | 99,2 | 99,2 | 99,4 | - |
| Polyamid A2 | Gew.-% | - | - | - | - | - | - | - | - | - | 99,6 |
| UV-Stabilisator B1 | Gew.-% | - | 0,2 | 0,2 | - | 0,2 | - | 0,2 | 0,2 | - | - |
| UV-Stabilisator B7 | Gew.-% | 0,2 | - | - | - | - | - | - | - | - | - |
| UV-Stabilisator B8 | Gew.-% | - | 0,2 | - | - | - | - | - | - | - | - |
| UV-Stabilisator B9 | Gew.-% | - | - | 0,2 | 0,2 | - | - | - | - | - | - |
| UV-Stabilisator B10 | Gew.-% | - | - | - | - | 0,2 | 0,2 | - | - | - | - |
| UV-Stabilisator B11 | Gew.-% | - | - | - | - | - | - | 0,2 | 0,2 | 0,2 | - |
| Hitzestabilisator 1 | Gew.-% | 0,2 | 0,2 | 0,2 | 0,2 | 0,2 | 0,2 | 0,2 | 0,2 | 0,2 | 0,2 |
| Hitzestabilisator 2 | Gew.-% | 0,2 | 0,2 | 0,2 | 0,2 | 0,2 | 0,2 | 0,2 | 0,2 | 0,2 | 0,2 |

| **Tests** | | | | | | | | | | | |
|---|---|---|---|---|---|---|---|---|---|---|---|
| Yellow-Index (YI 1) | orginal | 38,6 | 10,5 | 14,5 | 14,4 | 6,2 | 5,5 | 6,7 | 6,6 | 5,3 | 1,9 |
| Yellow-Index (YI 2) | 12 Zyklen | 51,2 | 16,0 | 19,6 | 20,2 | 17,8 | 20,7 | 18,8 | 22,0 | 23,9 | 10,3 |
| (YI 2) - (YI 1) | - | 12,6 | 5,5 | 5,1 | 5,8 | 11,6 | 15,2 | 12,1 | 15,4 | 18,6 | 8,4 |
| Zug-E-Modul | MPa | - | - | - | - | - | - | - | - | - | 2000 |
| Reissfestigkeit | MPa | - | - | - | - | - | - | - | - | - | 65 |
| Reissdehnung | % | - | - | - | - | - | - | - | - | - | 40 |
| Schlagzähigkeit Charpy 23 °C | kJ/m2 | - | - | - | - | - | - | - | - | - | oB |
| Kerbschlagzähigkeit Charpy 23 °C | kJ/m2 | - | - | - | - | - | - | - | - | - | 9 |

| | | | | | | | | | | | |
|---|---|---|---|---|---|---|---|---|---|---|---|
| oB ohne Bruch | | | | | | | | | | | |

In Tabelle 5 basierend die Vergleichsbeispiele 13 bis 21 auf dem Polyamid A1, während für das Vergleichsbeispiel 22 das Polyamid A2 eingesetzt wurde. In den Beispielen 13 und 18 wurde ein einziger UV-Stabilisator (UV-Stabilisator B7 bzw. B10) eingesetzt. Die Vergleichsbeispiele 14 bis 17 sowie 19 bis 21 zeigen Kombinationen von zwei UV-Stabilisatoren. Im Vergleichsbeispiel 22 wurde auf den Zusatz eines UV-Stabilisators verzichtet.

Aus der Tabelle ist zu entnehmen, dass der ursprüngliche Yellow-Index (YI 1) für die Vergleichsbeispiele 13 bis 16 sehr hoch ist und auch der Anstieg des Yellow-Indexes während der Strahlungs- und Temperaturbehandlung deutlich über den erfindungsgemäßen Beispielen liegt. Die Vergleichsbeispiele 17 bis 21 zeigen zwar einen geringeren ursprünglichen Yellow-Index (YI 1), hier ist jedoch der Anstieg des Yellow-Indexes während der Strahlungs- und Temperaturbehandlung unvertretbar hoch. Das auf dem Polyamid A2 basierende Vergleichsbeispiel 22 zeigt einen geringen ursprünglichen Yellow-Index (YI 1), allerdings kommt es hier zu einem sehr hohen Anstieg des Yellow-Indexes während der Strahlungs- und Temperaturbehandlung.

Aus den Untersuchungen des Yellow-Indexes ergibt sich somit, dass die erfindungsgemäßen Polyamidformmassen eine deutlich verbesserte Vergilbungsbeständigkeit, insbesondere im Hinblick auf die Vergilbung während der Strahlungs- und Temperaturbehandlung zeigen.

## Patentansprüche

1. Polyamidformmasse enthaltend:
a) mindestens ein teilaromatisches Polyamid herstellbar durch Polykondensation von
a1) mindestens einer aromatischen Dicarbonsäure und ggf. mindestens einer aliphatischen Dicarbonsäure mit 6 bis 44 C-Atomen
a2) mindestens einem aliphatischen und/oder cycloaliphatischen Diamin und
a3) ggf. mindestens einem Lactam mit 4 bis 15 C-Atomen und/oder mindestens einer α,ω-Aminosäure mit 4 bis 15 C-Atomen,
b) mindestens einen UV-Absorber aus der Gruppe der N,N'-Oxamide sowie
c) mindestens einen UV-Absorber aus der Gruppe der Hydroxyphenyltriazine.

2. Polyamidformmasse nach Anspruch 1,
Polyamidformmasse nach Anspruch 1, **dadurch gekennzeichnet, dass** der UV-Absorber unter b) ausgewählt ist aus der Gruppe der N,N'-Oxamide der allgemeinen Formel I
R₁-NH-CO-CO-NH-R₂ I
wobei R₁ und R₂ cyclische Reste sind, wobei jeder einzelne Ring 4 bis 6 C-Atome enthält und die cyclischen Reste unabhängig voneinander ausgewählt sind aus der Gruppe bestehend aus homocyclischen Resten, heterocyclischen Resten, aromatischen Resten oder polycyclischen Resten sind und wobei die cyclischen Reste gegebenenfalls substituiert sind.

3. Polyamidformmasse nach einem der vorhergehenden Ansprüche, **dadurch gekennzeichnet, dass** der UV-Absorber unter b) ausgewählt ist aus der Gruppe der Oxalanilide der allgemeinen Formel II 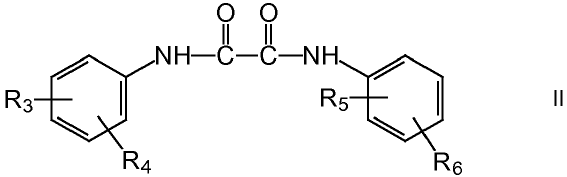 mit
R₃, R₄, R₅ und R₆ unabhängig ausgewählt aus der Gruppe bestehend aus H, Hydroxy, Phenyl, linearen oder verzweigten Alkoxyresten mit 1 bis 12 C-Atomen, bevorzugt 1 bis 8 C-Atomen, besonders bevorzugt 2 bis 6 C-Atomen, linearen oder verzweigten Alkylresten mit 1 bis 12 C-Atomen, bevorzugt 1 bis 8 C-Atomen, besonders bevorzugt 2 bis 6 C-Atomen,
insbesondere eine Verbindung der Formel III: 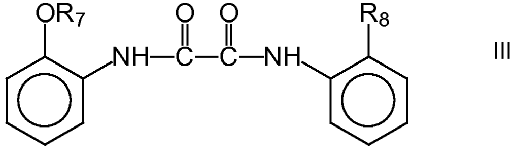 mit
R₇ und R₈ unabhängig voneinander ausgewählt aus der Gruppe bestehend aus linearen oder verzweigten Alkylresten mit 1 bis 12 C-Atomen, bevorzugt 1 bis 8 C-Atomen, besonders bevorzugt 2 bis 6 C-Atomen.

4. Polyamidformmasse nach einem der vorhergehenden Ansprüche, **dadurch gekennzeichnet, dass** der UV-Absorber unter c) eine Verbindung der allgemeinen Formel IV mit 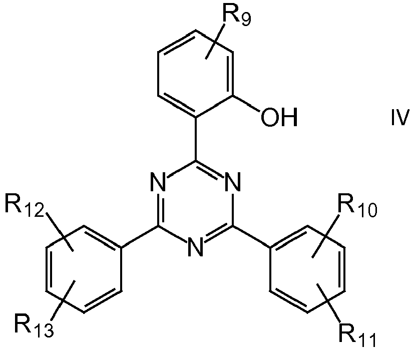 R₉, R₁₀, R₁₁, R₁₂ und R₁₃ unabhängig ausgewählt aus der Gruppe bestehend aus H, Hydroxy, Phenyl, linearen oder verzweigten Alkoxyresten mit 1 bis 12 C-Atomen, bevorzugt 1 bis 8 C-Atomen, besonders bevorzugt 2 bis 6 C-Atomen, linearen oder verzweigten Alkylresten mit 1 bis 12 C-Atomen, bevorzugt 1 bis 8 C-Atomen, besonders bevorzugt 2 bis 6 C-Atomen,
insbesondere eine Verbindung der Formel V: 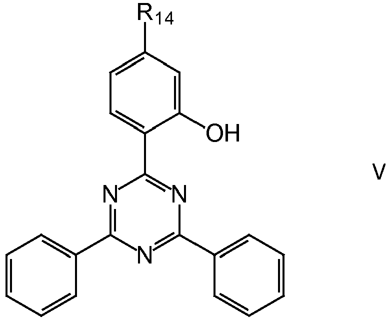 mit
R₁₄ = linearen oder verzweigten Alkoxyresten mit 1 bis 12 C-Atomen, bevorzugt 1 bis 8 C-Atomen, besonders bevorzugt 2 bis 6 C-Atomen.

5. Polyamidformmasse nach einem der vorhergehenden Ansprüche, **dadurch gekennzeichnet, dass** die mindestens eine aliphatische Dicarbonsäure ausgewählt ist aus der Gruppe bestehend aus Bernsteinsäure, Glutarsäure, Adipinsäure, Pimelinsäure, Korksäure, Azelainsäure, Sebazinsäure, Undecandisäure, Dodecandisäure, Tridecandisäure, Tetradecandisäure Pentadecandisäure, Hexadecandisäure, Octadecandisäure und Mischungen hiervon und/oder die mindestens eine aromatische Dicarbonsäure ausgewählt ist aus der Gruppe bestehend aus Isopthalsäure, Terephthalsäure, Napthtalindicarbonsäure und Mischungen hiervon.

6. Polyamidformmasse nach einem der vorhergehenden Ansprüche, **dadurch gekennzeichnet, dass** das mindestens eine aliphatische oder cycloaliphatische Diamin ausgewählt ist aus der Gruppe bestehend aus Ethylendiamin, Butandiamin, Pentandiamin, Hexamethylendiamin, Octandiamin, Methyloctandiamin, Nonandiamin, Decandiamin, Undecandiamin, Dodecandiamin, Trimethylhexamethylendiamin, Methylpentandiamin, Bis(aminocyclohexyl)methan und seinen Alkylderivaten, Bis(aminocyclohexyl)propan und seinen Alkylderivaten, Isophorondiamin, Norbornandiamin, Bis(aminomethyl)norbornan, Xylylendiamin, Bis(aminomethyl)cyclohexan und seinen Alkylderivaten sowie Mischungen hiervon.

7. Polyamidformmasse nach einem der vorhergehenden Ansprüche, **dadurch gekennzeichnet, dass** das mindestens eine teilaromatische Polyamid amorph oder teilkristallin ist und insbesondere ausgewählt ist aus der Gruppe bestehend aus PA 61, PA 6I/6T, PA 10T/6T, PA 10T/612, PA MXD6, PA 6T/6I, PA 6T/66, PA 6I/6T/6NDC, PA MXDI/6I, PA 6T/6I/66
PA MXDI/MDT/6I/6T, PA MXDI/12I, PA MXDI, PA NDT/INDT, PA MACMI/12, PA MACMT/12, PA MACMI/MACM12, PA MACMT/MACM12,
PA MACMI/MACMNDA, PA MACMT/MACMNDA,
PA MACMI/MACMT/12, PA 6I/MACMI/12, PA 6I/6T/MACMI/MACMT, PA 6I/6T/MACMI/MACMT/12,
PA 6I/6T/MACMI/MACMT/MACM12/612,
PA MACMI/MACMT/MACM12/12, PA MACMI/MACMT/MACM12, PA 6I/6T/6NDC/MACMI/MACMT/MACMNDC, wobei das MACM ganz oder teilweise durch PACM und/oder das Laurinlactam ganz oder teilweise durch Caprolactam ersetzt sein kann,
bevorzugt PA 6I/6T, PA 10T/6T, PA 10T/612, PA 6T/6I, PA 6T/66, PA MACMI/12, PA MACMT/12, PA MACMI/MACM12,
PA MACMT/MACM12, PA MACMI/MACMT/12,
PA 6I/6T/MACMI/MACMT, PA 6I/6T/MACMI/MACMT/12,
PA 6I/6T/MACMI/MACMT/PACMI/PACMT/12,
PA MACMI/MACMT/MACM12, wobei das Laurinlactam ganz oder teilweise durch Caprolactam ersetzt sein kann,
besonders bevorzugt die amorphen, teilaromatischen Polyamide PA MACMI/12, PA MACMI/MACM12,
PA MACMT/MACM12, PA MACMI/MACMT/12,
PA 6I/6T/MACMI/MACMT, PA 6I/6T/MACMI/MACMT/12,
PA 6I/6T/MACMI/MACMT/PACMI/PACMT/12,
PA MACMI/MACMT/MACM12 und
insbesondere PA 6I/6T/MACMI/MACMT/PACMI/PACMT/12 und PA MACMI/MACMT/MACM12.

8. Polyamidformmasse nach einem der vorhergehenden Ansprüche, **dadurch gekennzeichnet, dass** die Polyamidformmasse einen Blend des teilaromatischen Polyamids mit einem weiteren Polyamid ist, wobei das weitere Polyamid vorzugsweise in einem Anteil von maximal 30 Gew.-%, bevorzugt maximal 20 Gew.-% und besonderes bevorzugt maximal 10 Gew.-% vorliegt und bevorzugt ausgewählt ist aus der Gruppe bestehend aus PA 6, PA 66, PA 69, PA 610, PA 612, PA 614, PA 618, PA 1010, PA 1212, PA 6/66/12, PA 6/66, PA 6/12, PA 11, PA 12, PA MACM12, PA MACM14, PA MACM18, PA PACM12, PA PACM14, PA PACM18, Polyetheramide, Polyetheresteramid sowie Blends und Legierungen hiervon und besonders bevorzugt ausgewählt ist aus der Gruppe bestehend aus PA 6, PA 69, PA 610, PA 612, PA 614, PA 1010, PA 1212, PA 6/66/12, PA 6/66, PA 6/12, PA 11, PA 12, Polyetheramide und Polyetheresteramide.

9. Polyamidformmasse nach einem der vorhergehenden Ansprüche, **dadurch gekennzeichnet, dass** die Polyamidformmasse weitere Additive enthält, insbesondere ausgewählt aus der Gruppe bestehend aus Kondensationskatalysatoren, Kettenreglern, Entschäumern, anorganischen Stabilisatoren, organischen Stabilisatoren, Gleitmitteln, Farbstoffen, Markierungsmitteln, Pigmenten, Farbstoffen, Nukleierungsmitteln, Antistatika, Entformungsmitteln, optischen Aufhellern, natürlichen Schichtsilikaten, synthetischen Schichtsilikaten, Glasfasern und deren Mischungen.

10. Polyamidformmasse nach einem der vorhergehenden Ansprüche, **dadurch gekennzeichnet, dass** die Polyamidformmasse folgende Zusammensetzung besitzt:
a) 91,6 bis 99,97 Gew.-%, bevorzugt 92,4 bis 99,85 Gew.-% und besonders bevorzugt 93,4 bis 99,7 Gew.-% des mindestens einen teilaromatischen Polyamids
b) 0,01 bis 1,2 Gew.-%, bevorzugt 0,05 bis 0,8 Gew.-% und besonders bevorzugt 0,1 bis 0,6 Gew.-% des mindestens einen UV-Stabilisators aus der Gruppe der N,N'-Oxamide,
c) 0,01 bis 1,2 Gew.-%, bevorzugt 0,05 bis 0,8 Gew.-% und besonders bevorzugt 0,1 bis 0,6 Gew.-% des mindestens einen UV-Stabilisators aus der Gruppe der Hydroxyphenyltriazine,
d) 0,01 bis 6 Gew.-%, bevorzugt 0,05 bis 6 Gew.-% und besonders bevorzugt 0,1 bis 5 Gew.-% weitere Additive,
wobei sich die Komponenten a) bis d) auf 100 Gew.-% ergänzen.

11. Polyamidformmasse nach einem der vorhergehenden Ansprüche, **dadurch gekennzeichnet, dass** die Polyamidformmasse
• 0 bis 40 Mol-%, bevorzugt 0 bis 30 Mol-% und besonders bevorzugt 0 bis 25 Mol-% der mindestens einen aliphatischen Dicarbonsäure, bezogen auf 50 Mol-% Dicarbonsäure, und
• 10 bis 50 Mol-%, bevorzugt 20 bis 50 Mol-% und besonders bevorzugt 25 bis 50 Mol-% der mindestens einen aromatischen Dicarbonsäure, bezogen auf 50 Mol-% Dicarbonsäure
enthält.

12. Polyamidformmasse nach einem der vorhergehenden Ansprüche, **dadurch gekennzeichnet, dass** die Polyamidformmasse
• 0 bis 50 Mol-%, bevorzugt 0 bis 45 Mol-% und besonders bevorzugt 35 bis 42 Mol-% der mindestens eines aliphatischen Diamins, bezogen auf 50 Mol-% Diamin, und
• 50 bis 0 Mol-%, bevorzugt 50 bis 5 Mol-% und besonders bevorzugt 15 bis 8 Mol-% der mindestens eines cyloaliphatischen Diamins, bezogen auf 50 Mol-% Diamin
enthält.

13. Polyamidformmasse nach einem der vorhergehenden Ansprüche, **dadurch gekennzeichnet, dass** die Polyamidformmasse 0 bis 40 Mol-%, bevorzugt 0 bis 30 Mol-%, besonders bevorzugt 2 bis 30 Mol-% bezogen auf 100 Mol-% des Polyamids a) eines Lactams mit 4 bis 15 C-Atomen und/oder mindestens einer α,ω-Aminosäure mit 4 bis 15 C-Atomen enthält.

14. Formkörper oder Beschichtung enthaltend oder bestehend aus einer Polyamidformmasse nach einem der vorhergehenden Ansprüche.

15. Formkörper nach dem vorhergehenden Anspruch in Form von Teilen eines elektrischen oder elektronischen Bauteils, eines Gehäuses oder eines Gehäusebestandteils, insbesondere Gehäuse oder Gehäuseteile für tragbare elektronische Geräte, Haushaltsgeräte, Haushaltsmaschinen, Geräte und Apparate für die Telekommunikation und Unterhaltungselektronik, Innen und Außenteile im Automobilsektor und im Bereich von anderen Transportmitteln, Innen und Außenteile, vorzugsweise mit tragender oder mechanischer Funktion im Bereich Elektro, Möbel, Sport, Maschinenbau, Sanitär und Hygiene, Medizin, Energie-und Antriebstechnik, insbesondere bevorzugt Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien oder zur Herstellung von mono- oder mehrschichtigen Folien, Behältern oder Rohren, wobei die mono- oder mehrschichtigen Folien z.B. anschliessend mit einem anderen Material, bevorzugt einem Polyamid hinterspritzt werden können, wobei die Folie vor dem Verspritzen auch tiefgezogen werden kann.

16. Verwendung einer Polyamidformmasse nach einem der Ansprüche 1 bis 13 zur Herstellung von Formkörpern oder Beschichtungen, insbesondere Teile eines elektrischen oder elektronischen Bauteils, eines Gehäuses oder eines Gehäusebestandteils, vorzugsweise Gehäuse oder Gehäuseteile für tragbare elektronische Geräte, Haushaltsgeräte, Haushaltsmaschinen, Geräte und Apparate für die Telekommunikation und Unterhaltungselektronik, Innen und Außenteile im Automobilsektor und im Bereich von anderen Transportmitteln, Innen und Außenteile, vorzugsweise mit tragender oder mechanischer Funktion im Bereich Elektro, Möbel, Sport, Maschinenbau, Sanitär und Hygiene, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien oder zur Herstellung von mono- oder mehrschichtigen Folien, Behältern oder Rohren, wobei die mono- oder mehrschichtigen Folien z.B. anschließend mit einem anderen Material, bevorzugt einem Polyamid hinterspritzt werden können, wobei die Folie vor dem Verspritzen auch tiefgezogen werden kann.

## Claims

1. Polyamide moulding composition comprising:
a) at least one partially aromatic polyamide producible by polycondensation of
a1) at least one aromatic dicarboxylic acid and possibly at least one aliphatic dicarboxylic acid with 6 to 44 C atoms,
a2) at least one aliphatic and/or cycloaliphatic diamine and
a3) possibly at least one lactam with 4 to 15 C atoms and/or at least one α,ω-amino acid with 4 to 15 C atoms,
b) at least one UV absorber from the group of N,N'-oxamides and also
c) at least one UV absorber from the group of hydroxyphenyltriazines.

2. Polyamide moulding composition according to claim 1, **characterised in that** the UV absorber under b) is selected from the group of N,N'-oxamides of the general formula I
R₁-NH-CO-CO-NH-R₂ I
R₁ and R₂ being cyclic radicals, each individual ring comprising 4 to 6 C atoms and the cyclic radicals, independently of each other, being selected from the group consisting of homocyclic radicals, heterocyclic radicals, aromatic radicals or polycyclic radicals and the cyclic radicals possibly being substituted.

3. Polyamide moulding composition according to one of the preceding claims, **characterised in that** the UV absorber under b) is selected from the group of oxalanilides of the general formula II 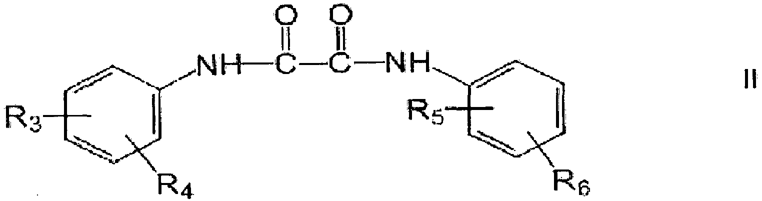 with
R₃, R₄, R₅ and R₆, independently, selected from the group consisting of H, hydroxy, phenyl, linear or branched alkoxy radicals with 1 to 12 C atoms, preferably 1 to 8 C atoms, particularly preferred 2 to 6 C atoms, linear or branched alkyl radicals with 1 to 12 C atoms, preferably 1 to 8 C atoms, particularly preferred 2 to 6 C atoms,
in particular a composition of formula III: 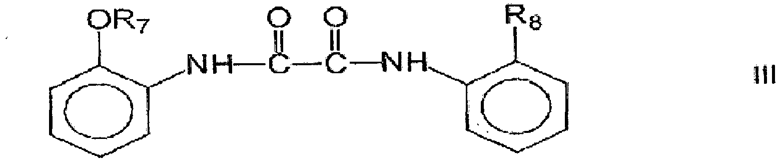 with
R₇ and R₈, independently of each other, selected from the group consisting of linear or branched alkyl radicals with 1 to 12 C atoms, preferably 1 to 8 C atoms, particularly preferred 2 to 6 C atoms.

4. Polyamide moulding composition according to one of the preceding claims, **characterised in that** the UV absorber under c) is a composition of the general formula IV 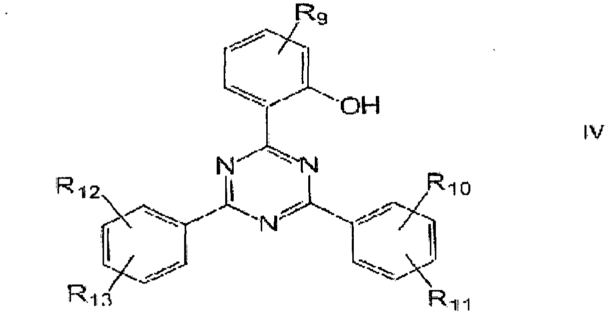 with
R₉, R₁₀, R₁₁, R₁₂ and R₁₃, independently, selected from the group consisting of H, hydroxy, phenyl, linear or branched alkoxy radicals with 1 to 12 C atoms, preferably 1 to 8 C atoms, particularly preferred 2 to 6 C atoms, linear or branched alkyl radicals with 1 to 12 C atoms, preferably 1 to 8 C atoms, particularly preferred 2 to 6 C atoms,
in particular a composition of formula V: 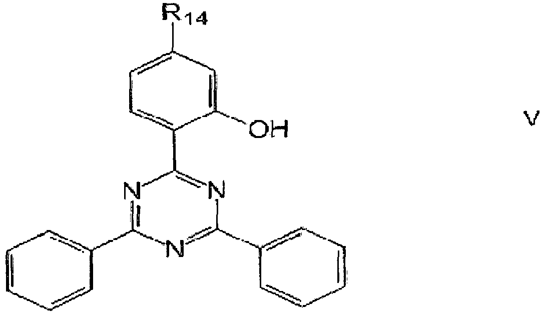 with
R₁₄ = linear or branched alkoxy radicals with 1 to 12 C atoms, preferably 1 to 8 C atoms, particularly preferred 2 to 6 C atoms.

5. Polyamide moulding composition according to one of the preceding claims, **characterised in that** the at least one alipihatic dicarboxylic acid is selected from the group consisting of succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and mixtures hereof, and/or the at least one aromatic dicarboxylic acid is selected from the group consisting of isophthalic acid, terephthalic acid, naphthalenedicarboxylic acid and mixtures hereof.

6. Polyamide moulding composition according to one of the preceding claims, **characterised in that** the at least one aliphatic or cycloaliphatic diamine is selected from the group consisting of ethylenediamine, butanediamine, pentanediamine, hexamethylenediamine, octanediamine, methyloctanediamine, nonanediamine, decanediamine, undecanediamine, dodecanediamine, trimethylhexamethylenediamine, methylpentanediamine, bis(aminocyclohexyl)methane and its alkyl derivatives, bis(aminocyclohexyl)propane and its alkyl derivatives, isophoronediamine, norbornanediamine, bis(aminomethyl)norbornane, xylylenediamine, bis(aminomethyl)cyclohexane and its alkyl derivatives and also mixtures hereof.

7. Polyamide moulding composition according to one of the preceding claims, **characterised in that** the at least one partially aromatic polyamide is amorphous or partially crystalline, and in particular is selected from the group consisting of PA 61, PA 6I/6T, PA 10T/6T, PA 10T/612, PA MXD6, PA 6T/6I, PA 6T/66, PA 6I/6T/6NDC, PA MXDI/6I, PA 6T/6I/66, PA
MXDI/MDT/6I/6T, PA MXDI/12I, PA MXDI, PA NDT/INDT, PA MACMI/12, PA MACMT/12, PA MACMI/MACM12, PA MACMT/MACM12, PA MACMI/MACMNDA, PA
MACMT/MACMNDA, PA MACMI/MACMT/12, PA 6I/MACMI/12, PA 6I/6T/MACMI/MACMT, PA 6I/6T/MACMI/MACMT/12, PA 6I/6T/MACMI/MACMT/MACM12/612, PA
MACMI/MACMT/MACM12/12, PA MACMI/MACMT/MACT12, PA 6I/6T/6NDC/MACMI/MACMT/MACMNDC, the MACM being able to be replaced entirely or partially by PACM and/or the laurinlactam entirely or partially by caprolactam, preferably PA 6I/6T, PA 10T/6T, PA 10T/612, PA 6T/6I, PA 6T/66, PA MACMI/12, PA MACMT/12, PA MACMI/MACM12, PA MACMT/MACM12, PA MACMI/MACMT/12, PA 6I/6T/MACMI/MACMT, PA 6I/6T/MACMI/MACMT/12, PA 6I/6T/MACMI/MACMT/PACMI/PACMT/ 12, PA
MACMI/MACMT/MACM12, the laurinlactam being able to be replaced entirely or partially by caprolactam, particularly preferred the amorphous, partially aromatic polyamides PA MACMI/12, PA MACMI/MACM12, PA MACMT/MACM12, PA MACMI/MACMT/12, PA 6I/6T/MACMI/MACMT, PA 6I/6T/MACMI/MACMT/12, PA
6I/6T/MACMI/MACMT/PACMI/PACMT/12, PA MACMI/MACMT/MACM12 and in particular PA 6I/6T/MACMI/MACMT/PACMI/PACMT/12 and PA MACMI/MACMT/MACM12.

8. Polyamide moulding composition according to one of the preceding claims, **characterised in that** the polyamide moulding composition is a blend of the partially aromatic polyamide with a further polyamide, the further polyamide being present preferably in a proportion of at most 30% by weight, preferably at most 20% by weight and particularly preferred at most 10% by weight, and preferably being selected from the group consisting of PA 6, PA 66, PA 69, PA 610, PA 612, PA 614, PA 618, PA 1010, PA 1212, PA 6/66/12, PA 6/66, PA 6/12, PA 11, PA 12, PA MACM12, PA MACM14, PA MACM18, PA PACM 12, PA PACM14, PA PACM 18, polyether amides, polyether ester amides, and also blends and alloys hereof, and particularly preferably being selected from the group consisting of PA 6, PA 69, PA 610, PA 612, PA 614, PA 1010, PA 1212, PA 6/66/12, PA 6/66, PA 6/12, PA 11, PA 12, polyether amides and polyether ester amides.

9. Polyamide moulding composition according to one of the preceding claims, **characterised in that** the polyamide moulding composition comprises further additives, selected in particular from the group consisting of condensation catalysts, chain regulators, de-foamers, inorganic stabilisers, organic stabilisers, lubricants, colourants, marking means, pigments, colourants, nucleation agents, antistatic agents, mould-release agents, optical brighteners, natural layer silicates, synthetic layer silicates, glass fibres and mixtures thereof.

10. Polyamide moulding composition according to one of the preceding claims, **characterised in that** the polyamide moulding composition has the following composition:
a) 91.6 to 99.97% by weight, preferably 92.4% to 99.85% by weight and particularly preferred 93.4 to 99.7% by weight, of the at least one partially aromatic polyamide,
b) 0.01 to 1.2% by weight, preferably 0.05 to 0.8% by weight and particularly preferred 0.1 to 0.6% by weight, of the at least one UV stabiliser from the group of N,N'-oxamides,
c) 0.01% to 1.2% by weight, preferably 0.05 to 0.8% by weight and particularly preferred 0.1 to 0.6% by weight, of the at least one UV stabiliser from the group of hydroxyphenyltriazines,
d) 0.01 to 6% by weight, preferably 0.05 to 6% by weight and particularly preferred 0.1 to 5% by weight, of further additives,
components a) to d) adding up to 100% by weight.

11. Polyamide moulding composition according to one of the preceding claims, **characterised in that** the polyamide moulding composition comprises
• 0 to 40% by mol, preferably 0 to 30% by mol and particularly preferred 0 to 25% by mol, of the at least one aliphatic dicarboxylic acid, relative to 50% by mol of dicarboxylic acid, and
• 10 to 50% by mol, preferably 20 to 50% by mol and particularly preferred 25 to 50% by mol, of the at least one aromatic dicarboxylic acid, relative to 50% by mol of dicarboxylic acid.

12. Polyamide moulding composition according to one of the preceding claims, **characterised in that** the polyamide moulding composition comprises
• 0 to 50% by mol, preferably 0 to 45% by mol and particularly preferred 35 to 42% by mol, of the at least one aliphatic diamine, relative to 50% by mol of diamine, and
• 50 to 0% by mol, preferably 50 to 5% by mol and particularly preferred 15 to 8% by mol, of the at least one cycloaliphatic diamine, relative to 50% by mol of diamine.

13. Polyamide moulding composition according to one of the preceding claims, **characterised in that** the polyamide moulding composition comprises 0 to 40% by mol, preferably 0 to 30% by mol, particularly preferred 2 to 30% by mol, relative to 100% by mol of polyamide a) of a lactam with 4 to 15 C atoms and/or at least one α,ω-amino acid with 4 to 15 C atoms.

14. Moulded article or coating comprising or consisting of a polyamide moulding composition according to one of the preceding claims.

15. Moulded article according to the preceding claim, in the form of parts of an electrical or electronic component, of a housing or of a housing component, in particular housings or housing parts for portable electronic devices, household appliances, household machines, devices and apparatus for telecommunication and consumer electronics, interior and exterior parts in the automobile sector and in the field of other transport means, interior and exterior parts, preferably with a portable or mechanical function in the field of electrics, furniture, sport, mechanical engineering, the sanitary field and hygiene, medicine, energy- and drive technology, particularly preferably mobile telephones, smart phones, organisers, laptop computers, notebook computers, tablet computers, radios, cameras, clocks, calculators, devices for playing music or video, navigation devices, GPS devices, electronic picture frames, external hard disks and other electronic storage media, or for the production of mono- or multilayer films, containers or pipes, the mono- or multilayer films being able to be rear-sprayed, e.g. subsequently with another material, preferably a polyamide, the film being able also to be deep-drawn before the spraying.

16. Use of a polyamide moulding composition according to one of the claims 1 to 13 for the production of moulded articles or coatings, in particular parts of an electrical or electronic component, of a housing or of a housing component, preferably housings or housing parts for portable electronic devices, household appliances, household machines, devices and apparatus for telecommunication and consumer electronics, interior and exterior parts in the automobile sector and in the field of other transport means, interior and exterior parts, preferably with a portable or mechanical function in the field of electrics, furniture, sport, mechanical engineering, the sanitary field and hygiene, medicine, energy- and drive technology, particularly preferably mobile telephones, smart phones, organisers, laptop computers, notebook computers, tablet computers, radios, cameras, clocks, calculators, devices for playing music or video, navigation devices, GPS devices, electronic picture frames, external hard disks and other electronic storage media, or for the production of mono- or multilayer films, containers or pipes, the mono- or multilayer films being able to be rear-sprayed, e.g. subsequently with another material, preferably a polyamide, the film being able also to be deep-drawn before the spraying.

## Revendications

1. Mélange à mouler de polyamides, contenant :
a) au moins un polyamide partiellement aromatique, pouvant être préparé par polycondensation
a1) d'au moins un acide dicarboxylique aromatique et éventuellement d'au moins un acide dicarboxylique aliphatique ayant 6 à 44 atomes de carbone,
a2) d'au moins une diamine aliphatique et/ou cycloaliphatique, et
a3) éventuellement d'au moins un lactame ayant 4 à 15 atomes de carbone et/ou d'au moins un acide α,ω-aminé ayant 4 à 15 atomes de carbone,
b) au moins un absorbant UV du groupe des N,N'-oxamides, ainsi que
c) au moins un absorbant UV du groupe des hydroxyphényltriazines.

2. Mélange à mouler de polyamides selon la revendication 1, **caractérisé en ce que** l'absorbant UV de b) est choisi dans le groupe des N,N'-oxamides de formule générale I
R₁-NH-CO-CO-NH-R₂ I
dans laquelle R₁ et R₂ sont des radicaux cycliques, chaque cycle individuel contenant 4 à 6 atomes de carbone, et les radicaux cycliques étant choisis indépendamment les uns des autres dans le groupe consistant en les radicaux homocycliques, les radicaux hétérocycliques, les radicaux aromatiques ou les radicaux polycycliques, et les radicaux cycliques étant éventuellement substitués.

3. Mélange à mouler de polyamides selon l'une des revendications précédentes, **caractérisé en ce que** l'absorbant UV de b) est choisi dans le groupe des oxalanilides de formule générale II 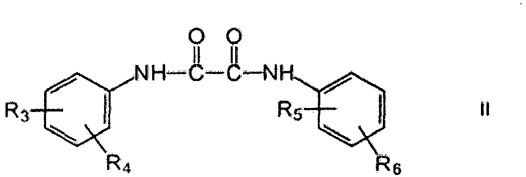 dans laquelle
R₃, R₄, R₅ et R₆ sont choisis d'une manière indépendante dans le groupe consistant en H, les groupes hydroxy, phényle, les radicaux alcoxy à chaîne droite ou ramifiée ayant 1 à 12 atomes de carbone, de préférence 1 à 8 atomes de carbone, d'une manière particulièrement préférée 2 à 6 atomes de carbone, les radicaux alkyle à chaîne droite ou ramifiée ayant 1 à 12 atomes de carbone, de préférence 1 à 8 atomes de carbone, d'une manière particulièrement préférée 2 à 6 atomes de carbone,
en particulier un composé de formule III : 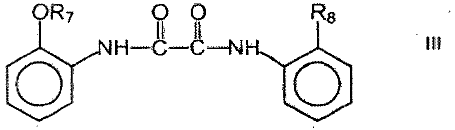 dans laquelle
R₇ et R₈ sont choisis indépendamment les uns des autres dans le groupe consistant en les radicaux alkyle à chaîne droite ou ramifiée ayant 1 à 12 atomes de carbone, de préférence 1 à 8 atomes de carbone, d'une manière particulièrement préférée 2 à 6 atomes de carbone.

4. Mélange à mouler de polyamides selon l'une des revendications précédentes, **caractérisé en ce que** l'absorbant UV de c) est un composé de formule générale IV 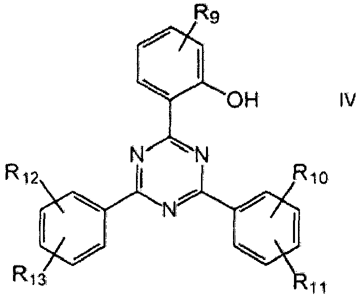 dans laquelle
R₉, R₁₀, R₁₁, R₁₂ et R₁₃ sont choisis d'une manière indépendante dans le groupe consistant en H, les groupes hydroxy, phényle, les radicaux alcoxy à chaîne droite ou ramifiée ayant 1 à 12 atomes de carbone, de préférence 1 à 8 atomes de carbone, de manière particulièrement préférée 2 à 6 atomes de carbone, les radicaux alkyle à chaîne droite ou ramifiée ayant 1 à 12 atomes de carbone, de préférence 1 à 8 atomes de carbone, d'une manière particulièrement préférée 2 à 6 atomes de carbone,
en particulier un composé de formule V 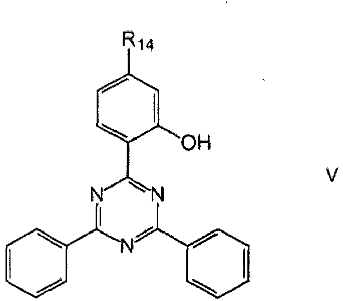 dans laquelle
R₁₄ représente des radicaux alcoxy à chaîne droite ou ramifiée ayant 1 à 12 atomes de carbone, de préférence 1 à 8 atomes de carbone, de manière particulièrement préférée 2 à 6 atomes de carbone.

5. Mélange à mouler de polyamides selon l'une des revendications précédentes, **caractérisé en ce que** l'au moins un acide dicarboxylique aliphatique est choisi dans le groupe consistant en l'acide succinique, l'acide glutarique, l'acide adipique, l'acide pimélique, l'acide subérique, l'acide azélaïque, l'acide sébacique, l'acide undécanedioïque, l'acide dodécanedioïque, l'acide tridécanedioïque, l'acide tétradécanedioïque, l'acide pentadécanedioïque, l'acide hexadécanedioïque, l'acide octadécanedioïque et les mélanges de ceux-ci,
et/ou l'au moins un acide dicarboxylique aromatique est choisi dans le groupe consistant en l'acide isophtalique, l'acide téréphtalique, l'acide naphtalènedicarboxylique et les mélanges de ceux-ci.

6. Mélange à mouler de polyamides selon l'une des revendications précédentes, **caractérisé en ce que** l'au moins une diamine aliphatique ou cycloaliphatique est choisie dans le groupe consistant en l'éthylènediamine, la butanediamine, la pentanediamine, l'hexaméthylènediamine, l'octanediamine, la méthyloctanediamine, la nonanediamine, la décanediamine, l'undécanediamine, la dodécanediamine, la triméthylhexaméthylènediamine, la méthylpentanediamine, le bis(aminocyclohexyl)méthane et ses dérivés alkylés, le bis(aminocyclohexyl)propane et ses dérivés alkylés, l'isophoronediamine, la norbornanediamine, le bis(aminométhyl)norbornane, la xylylènediamine, le bis(aminométhyl)cyclohexane et ses dérivés alkylés, ainsi que les mélanges de ceux-ci.

7. Mélange à mouler de polyamides selon l'une des revendications précédentes, **caractérisé en ce que** l'au moins un polyamide partiellement aromatique est amorphe ou partiellement cristallin et est en particulier choisi dans le groupe consistant en PA 61, PA 6I/6T, PA 10T/6T, PA 10T/612, PA MXD6, PA 6T/6I, PA 6T/66, PA 6I/6NDC, PA MXDI/6I, PA 6T/6I/66, PA MXDI,MDT/6I/6T, PA MXDI/12I, PA MXDI, PA NDT/INDT, PA MACMI/12, PA MACMT/12, PA MACMI/MACM12, PA MACMT/MACM12, PA MACMI/MACMNDA, PA MACMT/MACMNDA, PA MACMI/MACMT/12, PA 6I/MACMI/12, PA 6I/6T/MACMI/MACMT, PA 6I/6T/MACMI/MACMT/12, PA 6I/6T/MACMI/MACMT/MACM12/612, PA MACMI/MACMT/MACM12/12, PA MACMI/MACMT/MACM12, PA 6I/6T/6NDC/MACMI/MACMT/MACMNDC, le MACM pouvant être en totalité ou partiellement remplacé par le PCAM et/ou le laurinelactame pouvant être en totalité ou partiellement remplacé par le caprolactame,
de préférence PA 6I/6T, PA 10T/6T, PA 10T/612, PA 6T/6I, PA 6T/66, PA MACMI/12, PA MACMT/12, PA MACMI/MACM12, PA PACMT/MACM12, PA MACMI/MACMT/12, PA 6I/6T/MACMI/MACMT, PA 6I/6T/MACMI/MACMT/12, PA 6I/6T/MACMI/MACMT/PACMI/PACMT/12, PA MACMI/MACMT/MACM12, le laurinelactame pouvant être en totalité ou partiellement remplacé par le caprolactame,
de manière particulièrement préférée les polyamides amorphes partiellement aromatiques, PA MACMI/12, PA MACMI/MACM12, PA MACMT/MACM12, PA MACMI/MACMT/12, PA 6I/6T/MACMI/MACMT, PA 6I/6T/MACMI/MACMT/12, PA 6I/6T/MACMI/MACMT/PACMI/PACMT/12, PA MACMI/MACMT/MACM12 et en particulier PA 6I/6T/MACMI/MACMT/PACMI/PACMT/12 et PA MACMI/MACMT/MACM12.

8. Mélange à mouler de polyamides selon l'une des revendications précédentes, **caractérisé en ce que** le mélange à mouler de polyamides est un mélange du polyamide partiellement aromatique et d'un polyamide supplémentaire, le polyamide supplémentaire étant de préférence présent selon une proportion de 30 % en poids au maximum, de préférence de 20 % en poids au maximum et d'une manière particulièrement préférée de 10 % en poids au maximum, et étant de préférence choisi dans le groupe consistant en PA 6, PA 66, PA 69, PA 610, PA 612Z, PA 614, PA 618, PA 1010, PA 1212, PA 6/66/12, PA 6/66, PA 6/12, PA 11, PA 12, PA MACM12, PA MACM14, PA MACM18, PA PACM12, PA PACM14, PA PACM18, les polyétheramides, le polyétheresteramide, ainsi que les mélanges et alliages de ceux-ci, et d'une manière particulièrement préférée est choisi dans le groupe consistant en PA 6, PA 69, PA 610, PA 612, PA 614, PA 1010, PA 1212, PA 6/66/12, PA 6/66, PA 6/12, PA 11, PA 12, les polyétheramides et les polyétheresteramides.

9. Mélange à mouler de polyamides selon l'une des revendications précédentes, **caractérisé en ce que** le mélange à mouler de polyamides contient des additifs supplémentaires, choisis en particulier dans le groupe consistant en les catalyseurs de condensation, les régulateurs de chaîne, les antimoussants, les stabilisants inorganiques, les stabilisants organiques, les lubrifiants, les colorants, les agents de marquage, les pigments, les agents de nucléation, les antistatiques, les agents de démoulage, les azurants optiques, les phyllosilicates naturels, les phyllosilicates synthétiques, les fibres de verre et les mélanges de ceux-ci.

10. Mélange à mouler de polyamides selon l'une des revendications précédentes, **caractérisé en ce que** le mélange à mouler de polyamides a la composition suivante :
a) 91,6 à 99,97 % en poids, de préférence 92,4 à 99,85 % en poids et d'une manière particulièrement préférée 93,4 à 99,7 % en poids de l'au moins un polyamide partiellement aromatique,
b) 0,01 à 1,2 % en poids, de préférence 0,05 à 0,8 % en poids et d'une manière particulièrement préférée 0,1 à 0,6 % en poids de l'au moins un stabilisant UV du groupe des N,N'-oxamides,
c) 0,01 à 1,2 % en poids, de préférence 0,05 à 0,8 % en poids et d'une manière particulièrement préférée 0,1 à 0,6 % en poids de l'au moins un stabilisant UV du groupe des hydroxyphényltriazines,
d) 0,01 à 6 % en poids, de préférence 0,05 à 6 % en poids et d'une manière particulièrement préférée 0,1 à 5 % en poids d'additifs supplémentaires,
les composants a) à d) se complétant pour atteindre un total de 100 % en poids.

11. Mélange à mouler de polyamides selon l'une des revendications précédentes, **caractérisé en ce que** le mélange à mouler de polyamides contient
- 0 à 40 % en moles, de préférence 0 à 30 % en moles et d'une manière particulièrement préférée de 0 à 25 % en moles de l'au moins un acide dicarboxylique aliphatique, pour 50 % en moles de l'acide dicarboxylique,
- 10 à 50 % en moles, de préférence 20 à 50 % en moles et d'une manière particulièrement préférée 25 à 50 % en moles de l'au moins un acide dicarboxylique aromatique, pour 50 % en moles d'acide dicarboxylique.

12. Mélange à mouler de polyamides selon l'une des revendications précédentes, **caractérisé en ce que** le mélange à mouler de polyamides contient
- 0 à 50 % en moles, de préférence 0 à 45 % en moles et d'une manière particulièrement préférée 35 à 42 % en moles de l'au moins une diamine aliphatique, pour 50 % en moles de la diamine, et
- 50 à 0 % en moles, de préférence 50 à 5 % en moles et d'une manière particulièrement préférée 15 à 8 % en poids de l'au moins une diamine cycloaliphatique, pour 50 % en moles de diamine.

13. Mélange à mouler de polyamides selon l'une des revendications précédentes, **caractérisé en ce que** le mélange à mouler de polyamides contient 0 à 40 % en moles, de préférence 0 à 30 % en moles, d'une manière particulièrement préférée 2 à 30 % en moles, pour 100 % en moles du polyamide a), d'un lactame ayant 4 à 15 atomes de carbone et/ou d'au moins un acide α,ω-aminé ayant 4 à 15 atomes de carbone.

14. Objet moulé ou revêtement contenant un mélange à mouler de polyamides selon l'une des revendications précédentes, ou en étant constitué.

15. Objet moulé selon la revendication précédente, sous forme de pièces d'un composant électrique ou électronique, d'un boîtier ou d'un constituant de boîtier, en particulier de boîtiers ou d'éléments de boîtier destinés aux instruments électroniques mobiles, d' appareils ménagers, et électroménagers, d'appareils et d'instruments électroniques destinés à la télécommunication et aux loisirs, d'éléments internes et externes pour le secteur de l'automobile et pour d'autres moyens de transport, de pièces internes et externes, ayant de préférence une fonction portante ou mécanique dans le secteur électronique, de l'ameublement, du sport, de la construction mécanique, dans le domaine sanitaire et hygiénique, en médecine, en technique de production énergétique et de propulsion, d'une manière particulièrement préférée les téléphones mobiles, les smartphones, les organiseurs, les ordinateurs portables, les bloc-notes électroniques, les tablettes électroniques, les postes de radio, les appareils photographiques, les montres, les calculatrices, les lecteurs de musique ou de vidéo, les instruments de navigation, les GPS, les cadres photos numériques, les disques durs externes et les autres supports d'enregistrement électronique, ou servant à fabriquer des feuilles monocouches ou multicouches, des récipients ou des tubes, les feuilles mono- ou multicouches pouvant ensuite recevoir p.ex. un autre matériau par projection sur le côté arrière, de préférence un polyamide, la feuille pouvant aussi être emboutie avant la projection.

16. Utilisation d'un mélange à mouler de polyamides selon l'une des revendications 1 à 13 pour la fabrication d'objets moulés ou de revêtements, en particulier de pièces d'un composant électrique ou électronique, d'un boîtier ou d'un constituant de boîtier, de préférence de boîtiers ou d'éléments de boîtier destinés aux instruments électroniques mobiles, aux appareils ménagers, et électroménagers, aux appareils et instruments destinés à la télécommunication et à l'électronique de loisirs, aux éléments internes et externes pour le secteur de l'automobile et d'autres moyens de transport, aux pièces internes et externes, de préférence ayant une fonction portante ou mécanique dans le secteur de l'électronique, de l'ameublement, du sport, de la construction mécanique, dans le domaine sanitaire et hygiénique, en médecine, en technique de production énergétique et de propulsion, d'une manière particulièrement préférée les téléphones mobiles, les smartphones, les organiseurs, les ordinateurs portables, les bloc-notes électroniques, les tablettes électroniques, les postes de radio, les appareils photographiques, les montres, les calculatrices, les lecteurs de musique ou de vidéo, les instruments de navigation, les instruments GPS, les cadres photos électroniques, les disques durs externes et les autres supports d'enregistrement électronique, ou servant à fabriquer des feuilles monocouches ou multicouches, des récipients ou des tubes, les feuilles mono- ou multicouches pouvant ensuite recevoir p.ex. un autre matériau, par projection sur le côté arrière, de préférence un polyamide, la feuille pouvant aussi être emboutie avant la projection.
